# EUROPEAN PATENT SPECIFICATION

(11) **EP 0 726 703 B1**
(45) Date of publication and mention of the grant of the patent: **12.12.2001**
(21) Application number: 95930053.4
(22) Date of filing: 05.09.1995
(51) Int. Cl.: A01J 5/017

(54) **AN IMPLEMENT FOR AND A METHOD OF MILKING ANIMALS**
VORRICHTUNG UND VERFAHREN ZUM MELKEN VON TIEREN
DISPOSITIF ET PROCEDE DE TRAITE D'ANIMAUX

(30) Priority: 07.09.1994 NL 9401451
(43) Date of publication of application: 21.08.1996
(60) Divisional application: 01201932.9
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL95/00298
(87) International publication number: WO 96/07314

(56) References cited:
- EP-A- 0 069 560
- EP-A- 0 545 916
- FR-A- 2 593 668
- US-A- 4 726 322

## Description

The present invention relates to an implement for milking animals, such as cows, according to the preamble of claim 1.

Such an implement is known from EP-A-0 545 916. In this implement the teat cups are attached to teat cup carriers provided on robot arms. A flexible connecting member, as means of transport, is connected to a respective teat cup for drawing the teat cup to a respective teat cup carrier.

With an implement of the above-mentioned type it is not always possible to prevent the environment in which the milking robot is operating from becoming polluted. Especially the faeces of the animals can pollute the floor of the milking parlour. Particularly when the upper ends of the teat cups come into contact with the floor of the milking parlour, the milk may become contaminated. The latter may result in that the milk deteriorates in quality. Of course, this is highly undesirable, because lower grade milk may mean to the farmer a lower price.

The invention has for its objective to provide an implement of the above type where the above disadvantage does not occur or is at least considerably reduced.

According to the invention, this is achieved by the fact that said means of transport being a cable or similar means of transport with the aid of which the teat cup during the movement to the teat cup carrier is kept in an approximately upright position.

Means for keeping the teat cups in an upright position are known per se from EP-A-0 069 560. However, these means are not means of transporting teat cups to a teat cup carrier. In addition EP-A-0 069 560 does not relate to a teat cup carrier but to a suspension including a claw piece for a teat cup carrier. Furthermore, the teat cups of D1 have to be attached manually to the teats of an animal.

According to an embodiment of the invention, the teat cup is continuously or virtually continuously kept in an approximately upright position when it is moving to the teat cup carrier and when it is being disconnected from a teat. By this it is achieved that the upper end of the teat cup does not easily come into contact with the floor of the milking parlour, which may result in an improvement in the milk quality. In an exemplary embodiment of the invention, the means of transport comprise at least two cables connected with the teat cup.

According to a further feature of the invention, one cable extends essentially horizontally and one cable extends essentially vertically. In this manner, the teat cups can be fastened in the implement in a simple, inexpensive, but sound way. According to a further feature of the invention, the teat cup is provided with a cable fastening near the upper end and near the lower end.

According to a further feature of the invention, the cable extending essentially vertically has one end connected with a cable fastening provided on the milking parlour and the other end connected with the cable fastening provided near the upper side of the teat cup. According to another feature of the invention, the essentially horizontally extending cable has one end secured to a withdrawing member disposed near the milking parlour and the other end secured to the cable fastening disposed near the underside of the teat cup. When the teat cup is to be disconnected from the teat, the relevant teat cup can then be moved virtually horizontally to a side of the milking parlour by means of a withdrawing member and the cables.

According to a feature of the invention, the cable fastening for the essentially vertically extending cable is disposed on a frame beam extending in the longitudinal direction of the milking parlour. According to a further feature of the invention, the cable fastening is placed at approximately ¼ of the total length of the milking parlour as measured from the rear side of the milking parlour. The afore-mentioned cable fastening is, according to still another further feature of the invention, disposed near the top side of the milking parlour, preferably at a height of at least 1 m as measured from the floor of the milking parlour.

According to another aspect of the invention, the cable fastening of the essentially horizontally extending cable is disposed on a pneumatic cylinder of the withdrawing member. According to a further feature of the invention, the pneumatic cylinder is disposed close to the floor of the milking parlour and extends in the longitudinal direction of the milking parlour. In the exemplary embodiment of the invention, on both sides of the milking parlours there are provided two cylinders, each comprising a cable fastening.

According to a further feature of the invention, the implement comprises stands where the teat cups are placed upon completion of the milking and at least two robot arms, each provided with a gripper, with the aid of which the teat cups can be coupled to the teats.

In the exemplary embodiment of the invention, according to a feature of the invention, on each longitudinal side of the milking parlour there is provided a robot arm. The two robot arms are capable of being active simultaneously and, accordingly, capable of connecting two teat cups simultaneously. In this manner it is achieved that in a relatively short time the teat cups can be connected to the teats of an animal to be milked.

In order to realize a sound coupling between a grioper and a teat cup, the gripper comprises an electromagnet and the gripper is provided with a seating recess curved in accordance with the shell of a teat cup. The teat cup is capable of being firmly and rapidly seized simply by energizing the electromagnet, and it is simply disengaged by de-energizing the electromagnet.

According to a further feature of the invention, the stands where the teat cups are placed upon completion of the milking comprise a holder provided with a conical seating corresponding with the conical shape of the underside of the teat cup. By means of the conical seating it is possible to arrange a teat cup in one and the same position on the holder each time after milking. Due to the fact that the teat cups are arranged in a pre-defined position of rest on the holder, the teat cups are capable of being seized simply and efficiently by the gripper. According to a feature of the invention, a holder having two seatings is disposed close to each longitudinal side of the milking parlour.

According to still another aspect of the invention, near the central portion of the seating in the holder there is provided a hole, through which the essentially horizontally extending cable is led, the arrangement being such that in the holder the cable extends in the longitudinal direction of the milking parlour to the cable fastening of the pneumatic cylinder.

According to a feature of the invention, the implement comprises a robot arm equipped with a detector, such as a laser sensor, to locate the positions of the teats of an animal to be milked.

The invention will now be further explained with reference to the accompanying drawings, in which:
Figure 1 is a plan view of an implement for milking animals, which is provided with a milking robot having on each longitudinal side a gripper for seizing the teat cups;
Figure 2 shows a side view of the implement for milking animals according to Figure 1, where the means of transport, through which the teat cups are kept in an upright attitude when travelling, are clearly visible;
Figure 3 shows the implement for milking animals during operation, as viewed in the direction of the arrow III in Figure 1;
Figure 4 shows the implement for milking animals, as shown in Figures 1 and 2, in non-operating condition;
Figure 5 shows an enlargement of a detail of the gripper of the milking robot as well as a teat cup, and
Figure 6 is a top view of a section taken on the line VI-VI in Figure 5.

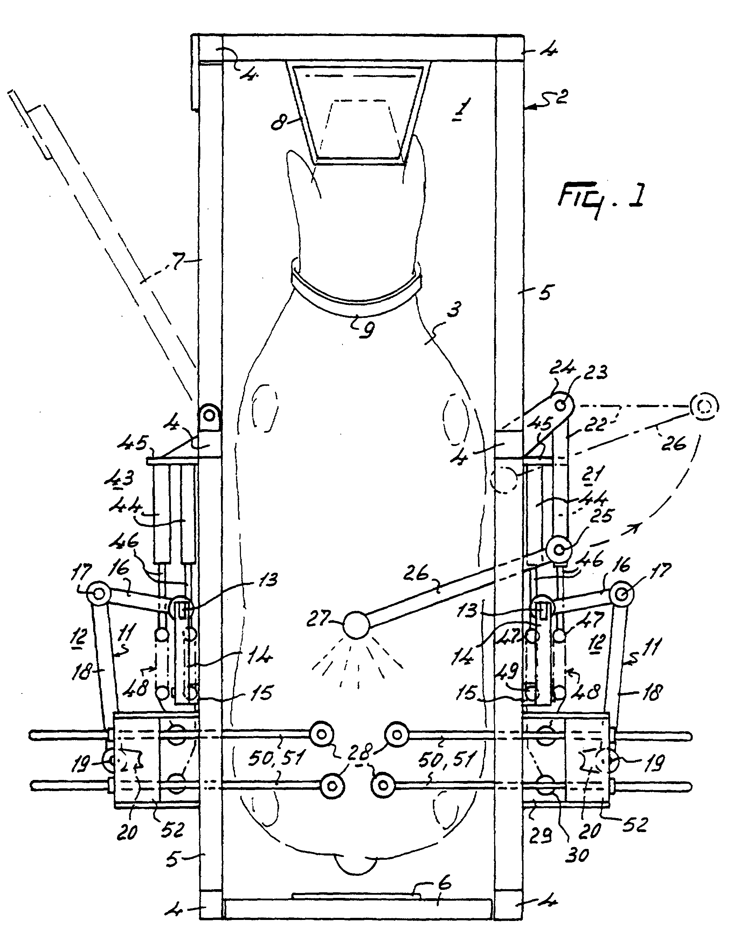

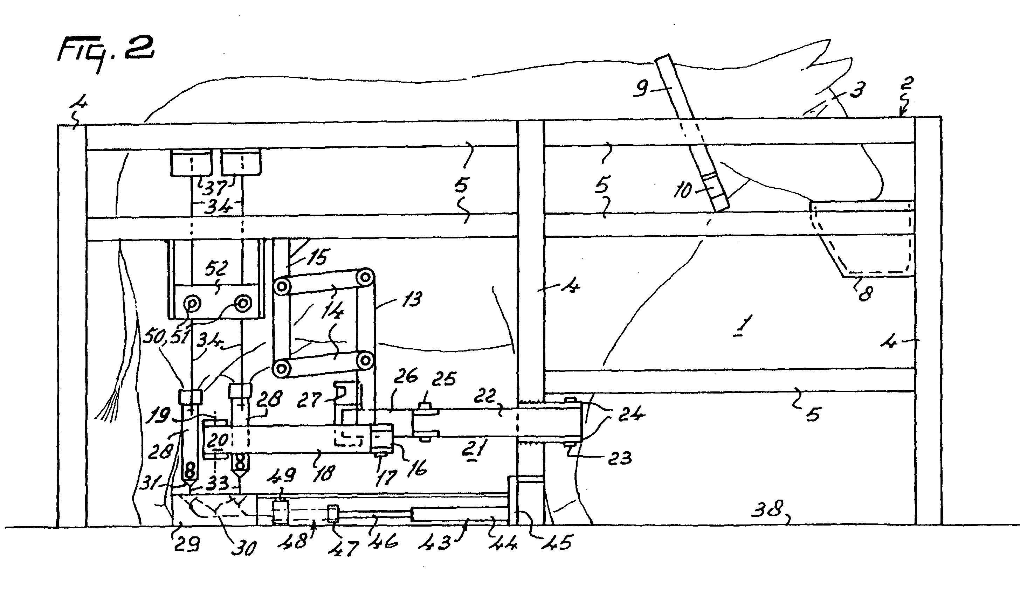

Figure 1 shows a plan view of a milking parlour 1 with a fencing 2 enclosing an animal, a cow in the present case. As is depicted in Figure 2, the fencing 2 comprises posts 4 and, in between them, cross beams 5 situated at a certain distance and parallel to each other. The milking parlour 1 is provided with an entrance door 6 on the rear side and an exit door 7 on the longitudinal side. On a cross beam 5 near the front side of the milking parlour 1 there is also provided a feed trough 8, wherein the animal 3 can be given concentrates. For identification of the animal 3, round the neck of the animal there is provided a collar 9 with a transmitter 10 which operates in conjunction with an animal recognition system (not shown).

In the vicinity of the milking parlour 1 there is furthermore provided a milking robot 11 which comprises a robot arm 12 on each longitudinal side of the milking parlour 1. On the robot arm 12 there is provided a vertical support 13 which is connected with a parallelogram-type hinged arm construction 14. The other end of the parallelogram-type hinged arm construction 14 is connected with a likewise vertically disposed supporting beam 15 connected with a cross beam 5 of the fencing 2. The robot arm 12 is capable of being moved vertically by means of a cylinder (not shown). The robot arm 12 comprises a first arm part 16 and a second arm part 18 capable of pivoting about a vertical shaft 17. On the end of the second arm part 18 there is provided a gripper 20 capable of rotating about a vertical shaft 19. A further robot arm 21 is mounted on the longitudinal side of the milking parlour 1 which is opposite to the exit door 7. The further robot arm 21 comprises a first arm part 22, of which one end is pivotably mounted on a vertical shaft 23 with a fork 24 fixedly connected with a post 4 of the milking parlour 1. The other end of the first arm part 22 is pivotably mounted on a vertical shaft 25 with a second arm part 26, whose end is provided with a detector 27 for finding the teat positions of the animal 3. In the present embodiment of the invention, the sensor 27 is designed as a laser detector and it is capable of being swung through an angle of approximately 150°.

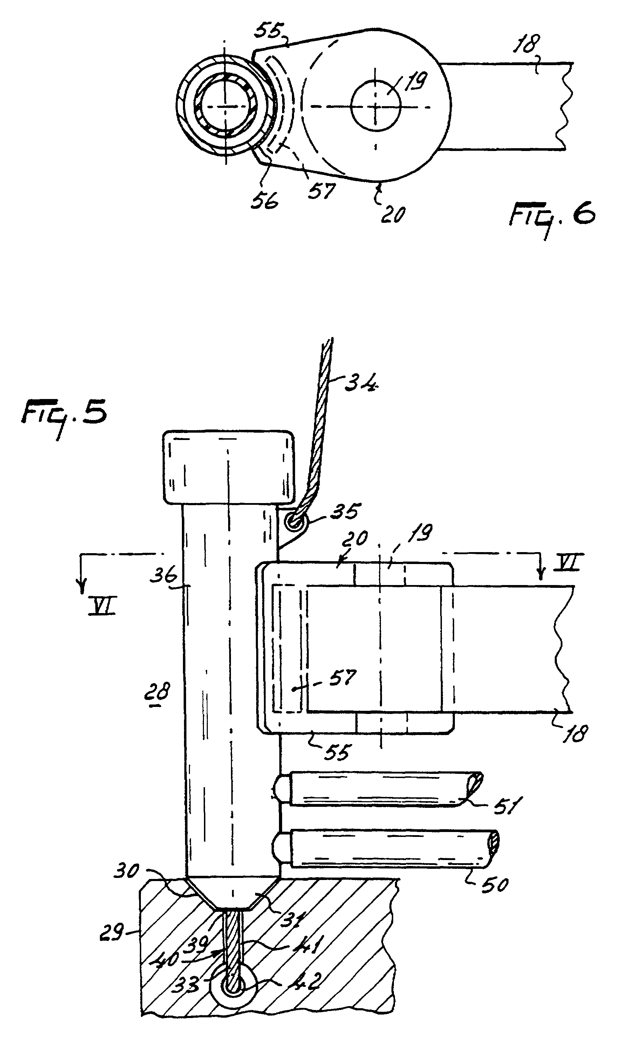

Further, the milking robot 11 is equipped with four teat cups 28, which are arranged on a teat cup carrier 29 (Figure 4) in pairs on both sides of the milking parlour when the milking robot 11 is out of operation. The teat cup carrier or holder 29 is provided with a conical seating 30 corresponding with the lowermost conical part of a teat cup 28. In the present exemplary embodiment, on the two longitudinal sides of the milking parlour 1 there is provided a holder 29 having two conical recesses 30 situated behind each other as seen in the longitudinal direction of the milking parlour 1 on the floor beside the milking parlour 1.

Each teat cup 28 is also provided with means of transport 32, with the aid of which the respective teat cup 28 is kept continuously or virtually continuously in an approximately vertical position during the teat cup 28 movement to the teat cup carrier 29 and during the disconnection from the teat. As Figure 4 shows, the means of transport 32 comprise a cable 33 extending essentially horizontally and a cable 34 extending essentially vertically. The vertical cable 34 has one end connected with a cable fastening 35 which is disposed near the top side of the teat cup 28, on the shell 36 of the teat cup 28 (Figure 5). The other end of the vertical cable 34 is connected with a cable fastening 37 which is disposed on a cross beam 5 of the fencing 2. The cable fastening 37 is a cylindrical body which also constitutes a guide for the end of the vertical cable 34. The length of the vertical cable 34 is dimensioned such that the upper part of the teat cup 28 can not come into contact with the floor 38 of the milking parlour 1. In the conical part 31 on the underside of the teat cup 28 there is provided a cable fastening 39, by means of which one end of the horizontal cable 33 is connected with the teat cup 28. As is shown in Figure 5, the horizontal cable 33 passes through a hole 40 in the teat cup carrier 29. The hole 40 has a first vertical part 41 which is provided in the centre of the conical seating 30 and, perpendicular to the first part 41, a second part 42 extending in the longitudinal direction of the milking parlour 1. The two horizontal cables 33 of one pair of teat cups 28 leave the teat cup carrier 29 approximately parallel to each other and extend in the longitudinal direction of the milking parlour to the withdrawing members 43. In the present exemplary embodiment of the invention, the withdrawing members 43 are designed as pneumatic cylinders, but they may also be hydraulic cylinders or electric equivalents of cylinders. On each longitudinal side of the milking parlour 1, in the exemplary embodiment of the invention, there are provided two pneumatic cylinders 44 side by side and parallel to each other. The cylinders 44 have the rear side of the cylinder housing connected with a strip 45 fixedly connected with a post 4 of the fencing 2. The end of the piston rod 46 of the pneumatic cylinder 44 comprises a cable fastening to which the horizontal cable 33 is fastened. In order to be able to apply a pneumatic cylinder 44 as compact as possible in the implement and to have still the possibility of paying off the horizontal cable sufficiently, a pulley mechanism 48 is used in the present embodiment of the invention. The pulley mechanism 48 comprises a roller guide designed as a cable fastening 47 surrounded by the horizontal cable 33 disposed in a loop and a vertical shaft 49, to which the end of the horizontal cable 33 is fastened.

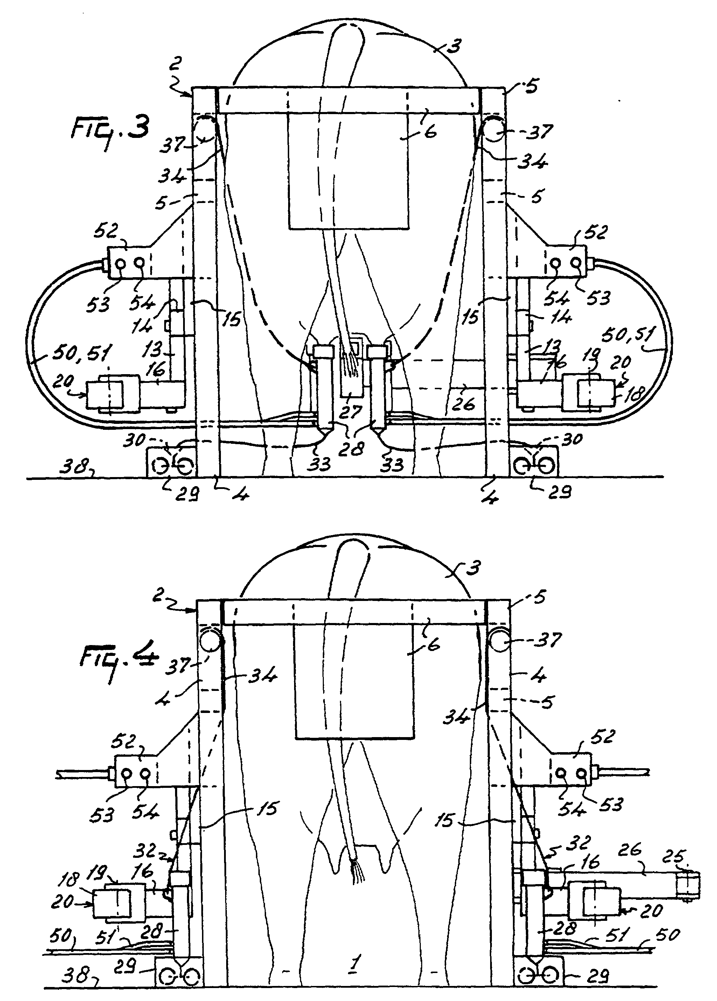

The teat cups 28 are further provided with a milk tube 50 and a pulsation tube 51, which extend from the teat cup 28 in a loop, transversely to the longitudinal direction of the milking parlour 1, to a collector block 52. The collector block 52 is fitted on a cross beam 5 of the fencing 2. The loops in the milk tube 50 and the pulsation tube 51 are dimensioned such that the teat cups 28 are capable of moving from the position of rest on the teat cup carrier 29 as shown in Figure 4 to underneath the udder of the animal 3 as shown in Figure 3. Due to that the tubes 50 and 51 are fastened to the teat cups 28 through a loop, the animal is permitted to move during milking without the teat cups 28 being disconnected. The collector block 52 is furthermore provided with a milk discharge line 53 for removing the milk obtained and a vacuum line 54 for the vacuum required during milking.

The gripper 20 comprises a block-shaped holder 55 which is rotatable about the vertical shaft 19 and which is, at the end, provided with a recess 56 (Figures 5 and 6) curved in accordance with the shell 36 of a teat cup 28. In the vicinity of the curved recess 56, in the block-shaped holder 55, there is provided a curved electromagnet 57 which may be energized or not.

The operation of the construction with the implement for milking animals as set forth hereinbefore is as follows:

After an animal 3 has entered the milking parlour 1 through the entrance door 6, the animal 3 is automatically identified by the animal recognition system by means of the transmitter 10. After the animal 3 has been identified by the animal recognition system, an amount of concentrates in the feed trough 8 may be supplied to the animal 3. Subsequently, by means of a (non-shown) computer, the robot arm 21 with the laser detector 27 thereon is swung to underneath the animal and, by means of the laser detector 27, the positions of the teats of the animal are determined and applied to the computer. Then the computer issues one or more signals to the two robot arms 12 which are disposed on the longitudinal side of the milking parlour 1 and which, acting on the basis of these signals, put the grippers 20 with the curved recess 56 to close to a shell of the teat cup 28. In the present embodiment of the invention, first, the teat cups 28 to be connected to the hind teats of the animal 3 to be milked are seized. Even before the curved recess 56 of a block-shaped holder 55 comes near the shell 36 of the teat cup 28, the computer issues a signal to the electromagnet 57 so as to produce an electromagnetic field in the vicinity of the curved recess 56 of the gripper 20. When the gripper 20 has approached the metal shell 36 of a teat cup 28 to a sufficient distance, the teat cup 28 is firmly drawn against the curved recess 56 of the block-shaped holder 55 owing to the presence of the electromagnetic field. A change in the electromagnetic field is caused by the metal shell 36, whereupon a signal is issued to the computer, signifying that the teat cup 28 has been coupled. The last mentioned signal can also be issued by a different type of sensor, such as a contact sensor, which is disposed in the block-shaped holder 55 or by means of a position determination through the detector 27.

The computer then issues a signal to the means of transport 32 of the relevant teat cup 28 which release the pneumatic cylinder 44 on account of this signal, all this being arranged such that the teat cup 28 can be lifted from the seating 30 of the teat cup carrier 29 by means of the robot arm 12 without being obstructed by the horizontal cable 33. Subsequently, the teat cup 28 is moved horizontally to underneath a hind teat of the animal 3 (Figure 3). When the teat cup 28 is moving to the teat, the vertical cable 34 swings along with the teat cup 28 and the horizontal cable 33 is also carried along. By means of the gripper 20, the teat cup 28 is then connected to the teat of an animal 3 to be milked, whereupon the milking of the relevant udder quarter may start. During milking, there is made a faintly curved loop in the horizontal cable 33 which permits a teat cup 28 to move along when the animal 3 moves during milking.

After the teat cups 28 have been connected to the hind teats, the robot arms 12 with their grippers 20 are put to the remaining two teat cups 28 and these are connected to the fore teats in a similar way. After it has been detected by means of a sensor (not shown) that an udder quarter is empty, the computer issues a signal to the relevant pneumatic cylinder 44, whereupon this cylinder 44 is energized, resulting in that the corresponding horizontal cable 33 is stretched and the teat cup 28 is drawn to the seating 30 of the teat cup carrier 29. During the motion to the teat cup carrier 29, the teat cup 28 is kept in an approximately upright attitude by the vertical cable 34. This prevents the top side of the teat cup 28 from coming into contact with the possibly contaminated floor 38 of the milking parlour. After all teat cups 28 have been thus disconnected from the teats of an animal 3 to be milked, the exit door 7 is opened and the animal 3 is allowed to leave the milking parlour 1, whereupon an other animal is permitted to enter the milking parlour 1 and the teat cups 28 can again be connected and the animal be milked.

The invention is not limited to that which has been set forth hereinbefore, but it also applies to that which is represented in the drawings.

## Claims

1. An implement for milking animals, such as cows, having one or more milking robots (11) with teat cups (28), teat cup carriers (29), and one or more milking parlours (1), a means of transport being connected to a respective teat cup (28) for transporting the teat cup (28) to a respective teat cup carrier (29), **characterized in that** said means of transport being a cable (34) or similar means of transport with the aid of which the teat cup (28) during the movement to the teat cup carrier (29) is kept in an approximately upright position.

2. An implement according to claim 1, **characterized in that** the teat cup (28) is continuously or virtually continuously kept in an approximately upright position when it is moving to the teat cup carrier (29) and when it is being disconnected from a teat.

3. An implement according to claim 1 or 2, **characterized in that** the means of transport comprise at least two cables (33; 34) connected with the teat cup (28).

4. An implement according to claim 3, **characterized in that** one cable (33) extends essentially horizontally and one cable (34) extends essentially vertically.

5. An implement according to claim 3 or 4, **characterized in that** the teat cup (28) is provided with a cable fastening (35; 39) near the upper end and one near the lower end.

6. An implement according to claim 5, **characterized in that** the cable (34) extending essentially vertically has one end connected with a cable fastening (37) provided on a milking parlour and the other end connected with the cable fastening (35) provided near the upper side of the teat cup (28).

7. An implement according to claim 6, **characterized in that** the cable fastening (37) is disposed on a frame beam (5) extending in the longitudinal direction of the milking parlour (1).

8. An implement according to claim 7, **characterized in that** the cable fastening (37) is disposed near the top side of the milking parlour (1).

9. An implement according to claim 4, **characterized in that** the cable fastening (47) of the essentially horizontally extending cable (33) is disposed on a pneumatic cylinder (44) of the withdrawing member (43).

10. An implement according to claim 9, **characterized in that** the pneumatic cylinder (44) is disposed close to the floor (38) of the milking parlour (1) and extends in the longitudinal direction of the milking parlour (1).

11. An implement according to claim 9 or 10, **characterized in that** on both sides of the milking parlour (1) there are provided two cylinders (44).

12. An implement according to any one of the preceding claims, **characterized in that** the implement comprises stands (29) where the teat cups (28) are placed upon completion of the milking and at least two robot arms (12), each provided with a gripper (20), with the aid of which the teat cups (28) can be coupled to the teats.

13. An implement according to claim 12, **characterized in that** on each longitudinal side of the milking parlour (1) there is provided a robot arm (12).

14. An implement according to claim 12 or 13, **characterized in that** the gripper (20) is provided with a recess (56) curved in accordance with the shell of a teat cup (28).

15. An implement according to any one of claims 12 through 14, **characterized in that** the gripper (20) comprises an electromagnet (57).

16. An implement according to any one of the preceding claims 12 through 15, **characterized in that** the stands (29) where the teat cups (28) are placed upon completion of the milking comprise a holder (30) provided with a conical seating corresponding with the conical shape (31) of the underside of a teat cup (28).

17. An implement according to claim 16, **characterized in that** near each longitudinal side of the milking parlour (1) there is provided a holder (29) with two seatings (30).

18. An implement according to claim 16 or 17, **characterized in that** near the central portion of the seating (30) in the holder there is provided a hole (41; 42), through which the essentially horizontally extending cable (33) is led, the arrangement being such that in the holder (29) the cable (33) extends in the longitudinal direction of the milking parlour (1).

19. An implement according to any one of the preceding claims, **characterized in that** the implement is provided with a robot arm (21) equipped with a detector (27), such as a laser sensor, to locate the positions of the teats of an animal to be milked.

20. An implement according to claim 4, **characterized in that** the essentially vertically extending cable (34) is situated along a side of the animal.

21. An implement according to claim 3, **characterized in that** the teat cup (28) constitutes a connection between two cables (33; 34).

## Patentansprüche

1. Vorrichtung zum Melken von Tieren, wie z. B. Kühen, die einen oder mehrere Melkroboter (11) mit Zitzenbechern (28) und Zitzenbecherhaltern (29) sowie einen oder mehrere Melkstände (1) aufweist, wobei eine Beförderungsvorrichtung mit einem zugehörigen Zitzenbecher (28) verbunden ist, um den Zitzenbecher (28) zu einem entsprechenden Zitzenbecherhalter (29) zu befördern,
**dadurch gekennzeichnet, daß** die Beförderungsvorrichtung durch ein Seil (34) oder eine ähnliche Beförderungsvorrichtung gebildet ist, mittels der der Zitzenbecher (28) während der Beförderung zum Zitzenbecherhalter (29) in einer annähernd aufrechten Position gehalten wird.

2. Vorrichtung nach Anspruch 1,
**dadurch gekennzeichnet, daß** der Zitzenbecher (28) ständig oder praktisch ständig in einer annähernd aufrechten Position gehalten wird, wenn er sich zum Zitzenbecherhalter (29) bewegt und wenn er von einer Zitze abgenommen wird.

3. Vorrichtung nach Anspruch 1 oder 2,
**dadurch gekennzeichnet, daß** die Beförderungsvorrichtung mindestens zwei mit dem Zitzenbecher (28) verbundene Seile (33; 34) umfaßt.

4. Vorrichtung nach Anspruch 3,
**dadurch gekennzeichnet, daß** ein Seil (33) sich im wesentlichen in horizontaler Richtung und ein Seil (34) sich im wesentlichen in vertikaler Richtung erstreckt.

5. Vorrichtung nach Anspruch 3 oder 4,
**dadurch gekennzeichnet, daß** der Zitzenbecher (28) mit einer Seilbefestigung (35; 39) nahe dem oberen Ende und einer nahe dem unteren Ende versehen ist.

6. Vorrichtung nach Anspruch 5,
**dadurch gekennzeichnet, daß** das sich im wesentlichen in vertikaler Richtung erstreckende Seil (34) an einem Ende mit einer an einem Melkstand angeordneten Seilbefestigung (37) und am anderen Ende mit der Seilbefestigung (35) verbunden ist, die nahe der Oberseite des Zitzenbechers (28) angebracht ist.

7. Vorrichtung nach Anspruch 6,
**dadurch gekennzeichnet, daß** die Seilbefestigung (37) an einem sich in Längsrichtung des Melkstandes (1) erstreckenden Rahmenträger (5) angeordnet ist.

8. Vorrichtung nach Anspruch 7,
**dadurch gekennzeichnet, daß** die Seilbefestigung (37) nahe der Oberseite des Melkstandes (1) angeordnet ist.

9. Vorrichtung nach Anspruch 4,
**dadurch gekennzeichnet, daß** die Seilbefestigung (47) des sich im wesentlichen in horizontaler Richtung erstreckenden Seiles (33) an einem pneumatischen Zylinder (44) des Einfahrgliedes (43) angeordnet ist.

10. Vorrichtung nach Anspruch 9,
**dadurch gekennzeichnet, daß** der pneumatische Zylinder (44) nahe dem Boden (38) des Melkstandes (1) angeordnet ist und sich in Längsrichtung des Melkstandes (1) erstreckt.

11. Vorrichtung nach Anspruch 9 oder 10,
**dadurch gekennzeichnet, daß** auf beiden Seiten des Melkstandes (1) zwei Zylinder (44) angeordnet sind.

12. Vorrichtung nach einem der vorhergehenden Ansprüche,
**dadurch gekennzeichnet, daß** die Vorrichtung Pfosten (29) umfaßt, auf denen die Zitzenbecher (28) nach Beendigung des Melkvorganges abgesetzt werden, und mindestens zwei Roboterarme (12), die jeweils mit einem Greifer (20) versehen sind, mit deren Hilfe die Zitzenbecher (28) an die Zitzen angeschlossen werden können.

13. Vorrichtung nach Anspruch 12,
**dadurch gekennzeichnet, daß** an jeder Längsseite des Melkstandes (1) ein Roboterarm (12) angeordnet ist.

14. Vorrichtung nach Anspruch 12 oder 13,
**dadurch gekennzeichnet, daß** der Greifer (20) mit einer Ausnehmung (56) versehen ist, die entsprechend dem Mantel eines Zitzenbechers (28) gekrümmt ist.

15. Vorrichtung nach einem der Ansprüche 12 bis 14,
**dadurch gekennzeichnet, daß** der Greifer (20) einen Elektromagneten (57) umfaßt.

16. Vorrichtung nach einem der vorhergehenden Ansprüche 12 bis 15,
**dadurch gekennzeichnet, daß** die Pfosten (29), auf denen die Zitzenbecher (28) nach Beendigung des Melkvorganges abgesetzt werden, einen Halter (30) umfassen, der mit einem konischen Sitz versehen ist, der der konischen Form (31) der Unterseite eines Zitzenbechers (28) entspricht.

17. Vorrichtung nach Anspruch 16,
**dadurch gekennzeichnet, daß** nahe jeder Längsseite des Melkstandes (1) ein Halter (29) mit zwei Sitzen (30) angeordnet ist.

18. Vorrichtung nach Anspruch 16 oder 17,
**dadurch gekennzeichnet, daß** nahe dem mittleren Teil des Sitzes (30) in dem Halter ein Loch (41; 42) angeordnet ist, durch welches das sich im wesentlichen horizontal erstreckende Seil (33) hindurchgeführt ist, wobei die Anordnung so getroffen ist, daß sich das Seil (33) in dem Halter (29) in Längsrichtung des Melkstandes (1) erstreckt.

19. Vorrichtung nach einem der vorhergehenden Ansprüche,
**dadurch gekennzeichnet, daß** die Vorrichtung einen Roboterarm (21) aufweist, der mit einem Detektor (27), wie z. B. einem Lasersensor, versehen ist, um die Positionen der Zitzen eines zu melkenden Tieres zu ermitteln.

20. Vorrichtung nach Anspruch 4,
**dadurch gekennzeichnet, daß** das sich im wesentlichen in vertikaler Richtung erstreckende Seil (34) entlang einer Seite des Tieres angeordnet ist.

21. Vorrichtung nach Anspruch 3,
**dadurch gekennzeichnet, daß** der Zitzenbecher (28) eine Verbindung zwischen zwei Seilen (33; 34) bildet.

## Revendications

1. Installation de traite d'animaux, tels que des vaches, ayant un ou plusieurs robots de traite (11) munis de gobelets trayeurs (28), de porte-gobelets trayeurs (29), et d'un ou de plusieurs box de traite (1), des moyens de transport étant connectés à un gobelet trayeur respectif (28) afin de transporter les gobelets trayeurs (28) vers un porte-gobelets trayeurs respectif (29), **caractérisée en ce que** lesdits moyens de transport sont constitués d'un câble (34) ou de moyens de transport similaires à l'aide desquels le gobelet trayeur (28) est maintenu dans une position approximativement verticale pendant le déplacement du porte-gobelets trayeurs (29).

2. Installation selon la revendication 1, **caractérisée en ce que** le gobelet trayeur (28) est maintenu dans une position approximativement verticale, en continu ou pratiquement en continu, lorsqu'il se déplace vers le porte-gobelets trayeurs (29) et lorsqu'il est déconnecté d'un trayon.

3. Installation selon la revendication 1 ou 2, **caractérisée en ce que** les moyens de transport comportent au moins deux câbles (33, 34) connectés au gobelet trayeur (28).

4. Installation selon la revendication 3, **caractérisée en ce qu'**un premier câble (33) s'étend sensiblement horizontalement, et un autre câble (34) s'étend sensiblement verticalement.

5. Installation selon la revendication 3 ou 4, **caractérisée en ce que** le gobelet trayeur (28) est muni d'une fixation de câble (35, 39) à proximité de l'extrémité supérieure, et d'une à proximité de l'extrémité inférieure.

6. Installation selon la revendication 5, **caractérisée en ce que** le câble (34) s'étendant sensiblement verticalement a une première extrémité connectée à une fixation de câble (37) agencée sur un box de traite, et l'autre extrémité connectée à la fixation de câble (35) agencée à proximité du côté supérieur du gobelet trayeur (28).

7. Installation selon la revendication 6, **caractérisée en ce que** la fixation de câble (37) est disposée sur une poutre de châssis (5) s'étendant dans la direction longitudinale du box de traite (1).

8. Installation selon la revendication 7, **caractérisée en ce que** la fixation de câble (37) est disposée à proximité du côté supérieur du box de traite (1).

9. Installation selon la revendication 4, **caractérisée en ce que** la fixation de câble (47) du câble s'étendant sensiblement horizontalement (33) est disposée sur un vérin pneumatique (44) de l'élément de retrait (43).

10. Installation selon la revendication 9, **caractérisée en ce que** le vérin pneumatique (44) est disposé à proximité du sol (38) du box de traite (1), et s'étend dans la direction longitudinale du box de traite (1).

11. Installation selon la revendication 9 ou 10, **caractérisée en ce que** deux vérins (44) sont agencés des deux côtés du box de traite (1).

12. Installation selon l'une quelconque des revendications précédentes, **caractérisée en ce que** l'installation comporte des emplacements (29) où les gobelets trayeurs (28) sont positionnés à la fin de la traite, et au moins de deux bras de robot (12), chacun muni d'un dispositif de saisie (20), à l'aide desquels les gobelets trayeurs (28) peuvent être accouplés aux trayons.

13. Installation selon la revendication 12, **caractérisée en ce qu'**un bras de robot (12) est agencé sur chaque côté longitudinal du box de traite (1).

14. Installation selon la revendication 12 ou 13, **caractérisée en ce que** le dispositif de saisie (20) est muni d'un évidement (56) incurvé conformément à l'enveloppe d'un gobelet trayeur (28).

15. Installation selon l'une quelconque des revendications 12 à 14, **caractérisée en ce que** le dispositif de saisie (20) comporte un électroaimant (57).

16. Installation selon l'une quelconque des revendications 12 à 15, **caractérisée en ce que** les emplacements (29) où sont positionnés les gobelets trayeurs (28) à la fin de la traite comportent un support (30) muni d'un siège conique correspondant à la forme conique (31) du côté inférieur du gobelet trayeur (28).

17. Installation selon la revendication 16, **caractérisée en ce qu'**un support (29) muni de deux sièges (30) est agencé à proximité de chaque côté longitudinal du box de traite (1).

18. Installation selon la revendication 16 ou 17, **caractérisée en ce qu'**un trou (41, 42) est agencé à proximité de la partie centrale du siège (30) du support, à travers lequel passe le câble s'étendant sensiblement horizontalement (33), l'agencement étant de telle sorte que dans le support (29), le câble (33) s'étend dans la direction longitudinale du box de traite (1).

19. Installation selon l'une quelconque des revendications précédentes, **caractérisée en ce que** l'installation est munie d'un bras de robot (21) muni d'un détecteur (27), tel qu'un détecteur laser, destiné à localiser les positions des trayons d'un animal à traire.

20. Installation selon la revendication 4, **caractérisée en ce que** le câble s'étendant sensiblement verticalement (34) est situé le long d'un côté de l'animal.

21. Installation selon la revendication 3, **caractérisée en ce que** le gobelet trayeur (28) constitue une connexion entre deux câbles (33, 34).
